# FASCICULE DE BREVET EUROPEEN

(11) **EP 1 864 374 B1**
(45) Date de publication et mention de la délivrance du brevet: **22.04.2020**
(21) Numéro de dépôt: 06725112.4
(22) Date de dépôt: 16.03.2006
(51) Int. Cl.: H02N 1/00

(54) **PROCEDE ET DISPOSITIF POUR DEPLACER UN ELEMENT A ENTRAINER UTILISANT UN ELEMENT ACTIONNEUR FORME PAR GRAVURE DANS UN MATERIAU SEMI-CONDUCTEUR**
EINRICHTUNG UND VERFAHREN ZUR VERSTELLUNG EINER ANTRIEB, MIT AKTUATORELEMENT IN HALBLEITERMATERIAL GEÄTZTEN
METHOD AND DEVICE FOR MOVING AN ELEMENT TO BE DRIVEN USING AN ACTUATING ELEMENT FORMED BY ETCHING IN A SEMICONDUCTOR MATERIAL

(30) Priorité: 18.03.2005 FR 0502700
(43) Date de publication de la demande: 12.12.2007
(73) Titulaire: Silmach, 25000 Besançon (FR)
(72) Inventeur: MINOTTI, Patrice, F-25660 Gennes (FR); BOURBON, Gilles, F-25000 Besançon (FR); LE MOAL, Patrice, F-25000 Besançon (FR); JOSEPH, Eric, F-25170 Chaucenne (FR)
(74) Mandataire: Regimbeau
(86) Numéro de dépôt international: PCT/EP2006/060806
(87) Numéro de publication internationale: WO 2006/097516

(56) Documents cités:
- WO-A-01/09519
- WO-A1-01/09519
- FR-A- 2 809 549
- FR-A- 2 852 111
- US-A1- 2004 159 813
- US-B1- 6 211 599
- US-B1- 6 313 562
- US-B1- 6 313 562
- US-B1- 6 465 929

## Description

L'invention concerne le domaine des microsystèmes électromécaniques (MEMS).

Ces microsystèmes électromécaniques sont formés par gravure dans des blocs ou plaquettes en matériau semi-conducteur, généralement en silicium.

Le document FR 2 852 111 (publié le 10 septembre 2004) décrit un dispositif d'horloge comprenant une roue dentée, un élément d'entraînement apte à engrener séquentiellement avec la roue dentée et un actionneur apte à déplacer l'élément d'entraînement selon un mouvement d'hystérésis de sorte que l'élément d'entraînement engrène avec des dents successives de la roue. Dans un tel dispositif, l'ensemble des éléments (roue dentée, élément d'entraînement, actionneur) est formé par microgravure dans un même bloc en matériau semi-conducteur. La précision du positionnement relatif des éléments est donc déterminée par la précision avec laquelle le bloc est gravé.

Le document US 6,313,562 décrit également un dispositif MEMS dans lequel l'ensemble des éléments est formé simultanément dans une même plaquette.

Le document WO 01/09519 A1 décrit une vanne de type MEMS, dans laquelle un dispositif d'entraînement comprenant des ensembles de doigts de commande. Le dispositif d'entraînement permet de passer d'un état ouvert à un état fermé de la vanne.

Or on souhaite pouvoir associer un dispositif d'entraînement formé par microgravure dans une plaquette et un élément entraîné réalisé au moyen d'une technologie alternative quelconque (technologie horlogère, micro moulage, usinage par électroérosion ou autre).

Cette approche hybride permettrait d'utiliser un dispositif d'entraînement standard et de l'associer à un élément entraîné adapté à une application particulière visée, par exemple une roue d'entrée d'un mécanisme de réduction de montre ou d'horloge, un rotor discoïdal denté de micromoteur rotatif pas à pas, ou encore une crémaillère de moteur linéaire.

Cela permettrait également de réaliser simultanément un grand nombre de dispositifs d'entraînement dans un même bloc en matériau semi-conducteur (wafer).

Cependant, lors de l'association du dispositif d'entraînement et de l'élément entraîné, le positionnement relatif du dispositif d'entraînement et de l'élément entraîné est délicat. En effet, l'incertitude de positionnement due par exemple à la précision de fabrication de l'élément entraîné et aux jeux mécaniques peut dans certains cas être supérieure à l'amplitude des oscillations mécaniques du mouvement de l'élément d'entraînement. Il en résulte que l'élément d'entraînement n'engrène pas avec l'élément à entraîner et le dispositif ne fonctionne pas

Un but de l'invention est de proposer un dispositif permettant l'entraînement de l'élément à entraîner malgré les incertitudes de positionnement relatives de l'élément entraîné vis à vis du dispositif d'entraînement.

Ce but est atteint dans le cadre de la présente invention grâce à un dispositif selon la revendication 1.

Les moyens élastiques permettent de maintenir l'élément d'entraînement en contact avec l'élément à entraîner et compensent ainsi les défauts de positionnement relatifs de la plaquette par rapport à l'élément à entraîner.

Le dispositif de l'invention peut en outre présenter les caractéristiques suivantes :
- les moyens élastiques s'étendent entre l'élément actionneur et l'élément d'entraînement,
- les moyens élastiques comprennent une lame flexible reliant l'élément d'entraînement à l'élément actionneur,
- le dispositif comprend des plots de positionnement fixés sur le support permettant le positionnement de la plaquette sur le support,
- la plaquette est disposée en appui sur des plots de positionnement,
- la plaquette présente au moins une encoche formée sur une tranche de la plaquette, l'encoche étant destinée à recevoir un plot de positionnement pour positionner la plaquette sur le support,
- l'élément actionneur comprend un premier module d'actionnement apte à déplacer l'élément d'entraînement selon une première direction pour entraîner l'élément à entraîner et un deuxième module d'actionnement apte à déplacer l'élément d'entraînement dans une deuxième direction pour éloigner l'élément d'entraînement de l'élément à entraîner, les modules d'actionnement étant aptes à être commandés simultanément pour générer un mouvement combiné d'hystérésis de l'élément d'entraînement,
- le deuxième module d'actionnement comprend une électrode et une tige flexible, l'électrode étant apte à être commandée pour déformer la tige flexible de manière à déplacer l'élément d'entraînement dans une deuxième direction pour éloigner l'élément d'entraînement de l'élément à entraîner,
- l'électrode présente une surface latérale convexe, de préférence parabolique, s'étendant en regard d'une portion de la lame flexible,
- le deuxième module d'actionnement comprend une série de butées disposées le long d'une surface latérale de l'électrode, les butées étant aptes à éviter un contact entre la lame et l'électrode.

L'invention propose également, selon la revendication 11, un procédé de montage d'un dispositif MEMS tel que défini précédemment, comprenant notamment une étape
consistant à maintenir en contact l'élément d'entraînement avec l'élément à entraîner par l'intermédiaire de moyens élastiques.

Le procédé peut présenter les caractéristiques suivantes :
- le dispositif comprenant des plots de positionnement fixés sur le support (30), le procédé comprend l'étape consistant à disposer la plaquette en appui sur des plots de positionnement,

la plaquette présentant au moins une encoche formée sur une tranche de la plaquette, le procédé comprend l'étape consistant à disposer un plot de positionnement dans l'encoche pour positionner la plaquette sur le support.

D'autres caractéristiques et avantages ressortiront encore de la description qui suit, laquelle est purement illustrative et non limitative et doit être lue en regard des figures annexées parmi lesquelles :
- la figure 1 représente de manière schématique, en perspective, un dispositif conforme à un premier mode de réalisation de l'invention,
- la figure 2 représente de manière schématique, en vue de dessus, un dispositif conforme au premier mode de réalisation de l'invention,
- la figure 3 représente de manière schématique, en vue de dessus, un dispositif conforme à un deuxième mode de réalisation de l'invention, lorsque la plaquette n'est pas encore positionnée par rapport à l'élément à entraîner,
- la figure 4 représente de manière schématique, en vue de dessus, un dispositif conforme au deuxième mode de réalisation de l'invention, une fois que la plaquette a été positionnée par rapport à l'élément à entraîner,
- la figure 5 représente de manière schématique une électrode destinée à être utilisée dans le dispositif représenté sur les figures 3 et 4.

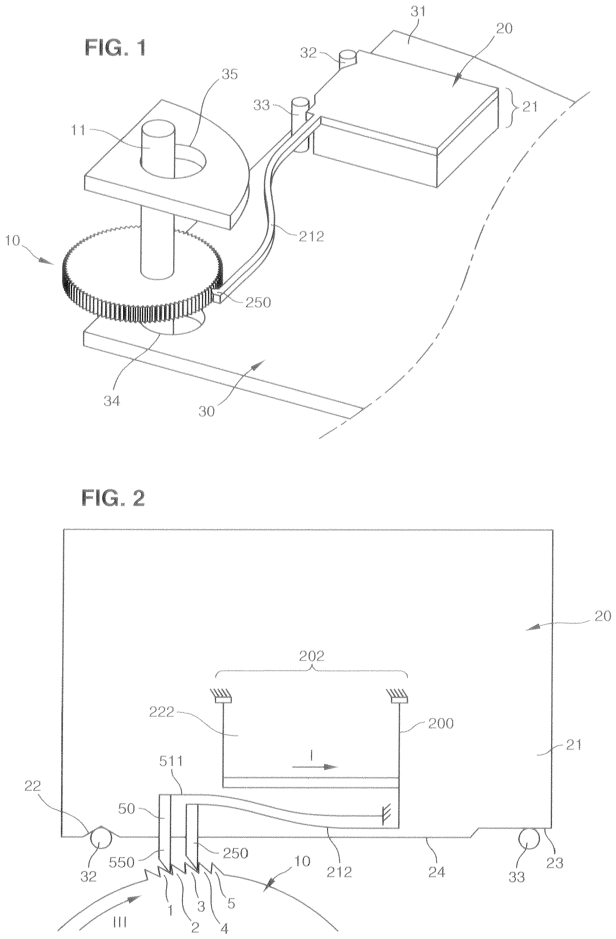

Sur les figures 1 et 2, le dispositif, conforme à un premier mode de réalisation de l'invention, comprend un élément entraîné 10, un dispositif d'entraînement 20 et un support 30.

Le support 30 comprend une surface plane de réception 31 sur laquelle sont disposés l'élément à entraîner 10 et le dispositif d'entraînement 20.

L'élément à entraîner 10 comprend une roue dentée de forme générale cylindrique. La roue dentée comprend une denture composée de dents asymétriques 1, 2, 3, 4, 5 et un arbre 11 sensiblement cylindrique.

Le support 30 comprend des orifices 34, 35 de forme générale cylindrique, destinés à recevoir l'arbre 11. Les orifices 34 et 35 forment des paliers aptes à guider l'arbre 11 en rotation.

Le dispositif d'entraînement 20 comprend une plaquette 21 en matériau semi-conducteur, tel que du silicium. Le dispositif d'entraînement 20 comprend un élément actionneur 200, un élément d'indexage 50 (non représenté sur la figure 1) et un élément d'entraînement 250, formés par microgravure dans la plaquette 21.

L'élément d'entraînement 250 se présente sous la forme d'une dent présentant une forme triangulaire. La dent s'étend à proximité de la roue 10 avec la pointe dirigée vers la roue 10, dans une direction radiale par rapport à la roue. L'élément d'entraînement 250 est ainsi apte à engrener avec les dents 1, 2, 3, 4, 5 de la roue 10.

L'élément actionneur 200 se compose principalement d'un module élémentaire d'actionnement tangentiel 202 et d'un module d'indexage 50.

Le module d'actionnement tangentielle 202 comprend une structure à peignes interdigités 222 (connus sous l'appellation anglo-saxonne de « comb drive ») et une lame flexible 212 s'étendant dans une direction générale tangentielle par rapport à la roue 10. L'élément d'entraînement 250 est relié par la lame tangentielle 212 à la structure à peignes interdigités 222.

Lorsque le module d'actionnement tangentiel 202 est commandé par un signal d'adressage alternatif, le module d'actionnement tangentiel 202 génère un mouvement alternatif dans une direction tangentielle (flèche I).

Le module d'indexage 50 comprend une lame flexible 511 s'étendant dans une direction tangentielle par rapport à la roue 10 et un élément d'indexage 550. La lame flexible 511 s'étend en porte-à-faux à partir du substrat et est flexible dans une direction radiale par rapport à la roue 10. La lame flexible 511 supporte au niveau de son extrémité libre l'élément d'indexage 550. L'élément d'indexage 550 se présente sous la forme d'une dent présentant une forme triangulaire. La dent s'étend à proximité de la roue 10 avec la pointe dirigée vers la roue 10, dans une direction radiale par rapport à la roue. L'élément d'indexage 550 est ainsi apte à être mise en prise avec les dents 1, 2, 3, 4, 5 de la roue 10.

Le dispositif, conforme au premier mode de réalisation de l'invention, comprend également deux plots de positionnement 32 et 33 fixés sur le support 30. Les plots de positionnement 32 et 33 présentent une forme générale cylindrique et s'étendent dans une direction perpendiculaire à la surface de réception 31 du support 30.

La plaquette 21 présente deux encoches 22 et 23 formées sur une tranche externe 24 de la plaquette. Les encoches 22 et 23 sont disposées de part et d'autre de l'élément d'entraînement 250. L'encoche 22 est destinée à recevoir le premier plot de positionnement 32 et l'encoche 23 est destinée à recevoir le deuxième plot de positionnement 33 pour positionner la plaquette 21 sur le support 30. Les plots de positionnement 32 et 33 définissent une position unique de la plaquette 21 sur la surface de réception 31 du support 30.

La première encoche 22 présente une forme générale en V. L'encoche 22 présente deux faces d'appui formant entre elles un angle de 120°. Chaque face d'appui de la première encoche 22 est destinée à venir en appui sur la surface cylindrique du plot 32.

La deuxième encoche 23 présente une face d'appui unique , parallèle à la tranche 24 de la plaquette 21, destinée à venir en appui sur la surface cylindrique du plot 33.

Les plots de positionnement 32 et 33 coopèrent avec les encoches 22 et 23 pour définir une position de la plaquette 20 sur la surface de réception 31 du support 30. Les plots de positionnement 32 et 33 forment ainsi des plots de référence qui ont pour fonction de caler le dispositif d'entraînement parallèlement à la surface de réception 31.

Le montage du dispositif comprend les étapes suivantes.

Selon une première étape de montage, la roue 10 est montée rotative sur le support 30. A cet effet, l'arbre 11 est monté sur les paliers 34 et 35 de sorte que la roue 10 solidaire de l'arbre 11 est en mesure de tourner librement autour d'un axe de rotation perpendiculaire à la surface de réception 31.

Selon une deuxième étape de montage, la plaquette 21 est amenée en appui sur les premier et deuxième plots 32 et 33.

Les plots 32 et 33 sont agencés sur le support 30 de sorte que l'élément d'entraînement 250 vient en contact avec la roue 10.

L'élément d'entraînement 250 est maintenu en contact avec la roue 10 par l'intermédiaire de la lame tangentielle 212. La lame 212 s'étend en porte-à-faux à partir de la structure à peignes interdigités 222 et est flexible dans une direction radiale par rapport à la roue 10. Du fait de l'élasticité de la lame 212, l'élément d'entraînement 250 est maintenu en prise avec la roue 10.

La lame flexible 212 absorbe les défauts de positionnement de la plaquette 21 par rapport à l'élément à entraîner 10.

En particulier, comme on peut le voir sur la figure 1, la roue 10 est montée sur un arbre 11 guidé par les paliers 34, 35. La position de la roue par rapport au support 30 est sujette à des incertitudes liées aux tolérances d'usinage de l'ensemble des pièces du dispositif, notamment :
- aux défauts géométriques de la roue 10 et de l'arbre 11 (défauts de cylindricité et de concentricité de la roue, défauts de rectitude de l'arbre 11),
- aux défauts de positionnement des alésages recevant les paliers de guidage 34, 35 de l'arbre 11,
- aux jeux mécaniques de montage de la roue 10 sur l'arbre 11 et aux jeux de guidage existant entre les paliers 34, 35 et l'arbre 11.

En outre, les incertitudes de positionnement relatif de la plaquette 21 par rapport à la roue 10 découlent également des défauts de positionnement des plots de positionnement 32 et 33 sur le support 30.

Le dispositif fonctionne de la manière suivante.

Le module d'actionnement tangentiel 202 est commandé par un signal d'adressage alternatif.

Au cours d'une première alternance du mouvement généré par le module d'actionnement tangentiel 202, l'élément d'entraînement 250 vient en prise avec la roue 10 et tracte la roue 10. L'élément d'indexage 550 franchit une dent de la roue 10.

Au cours d'une deuxième alternance en sens opposé générée par le module d'actionnement tangentiel 202, l'élément d'indexage 550 bloque la roue 10 et l'élément d'entraînement 250 glisse sur la roue 10.

La roue 10 est ainsi entraînée selon un mouvement de rotation pas à pas (flèche III) par l'élément d'entraînement 250. L'élément d'indexage 50 forme un cliquet anti-retour qui empêche la rotation de la roue 10 en sens inverse.

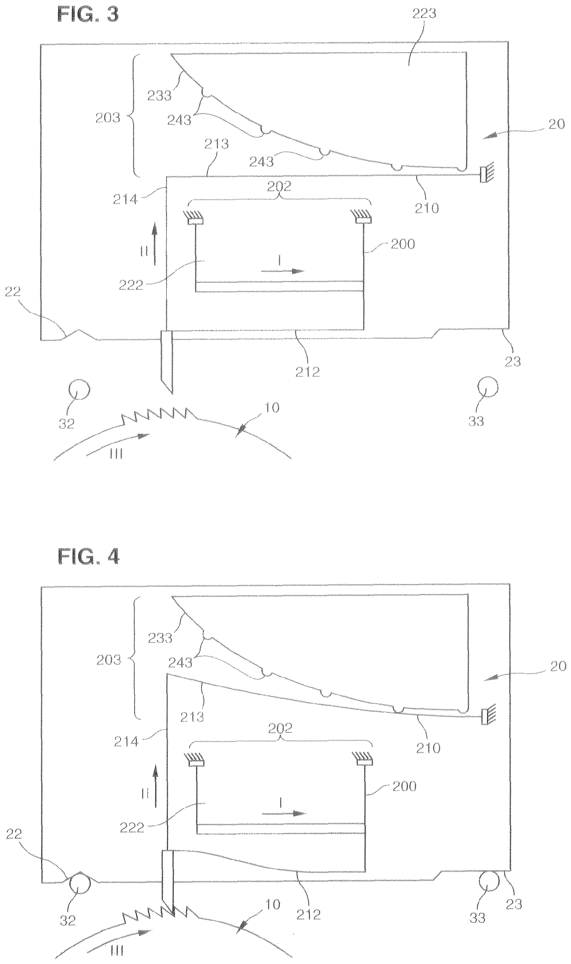

Les figures 3 et 4 représentent un dispositif conforme à un deuxième mode de réalisation de l'invention. Le montage est identique au montage du premier mode de réalisation, excepté que l'élément actionneur 200 comprend un module d'actionnement radial 203.

Le dispositif comprend un élément entraîné 10, un dispositif d'entraînement 20 et un support 30.

L'élément à entraîner 10 comprend une roue, éventuellement dentée.

Le dispositif d'entraînement 20 comprend une plaquette 21 en matériau semi-conducteur, tel que du silicium. Le dispositif d'entraînement 20 comprend un élément actionneur 200 et un élément d'entraînement 250 formés par microgravure dans la plaquette 21.

Dans ce deuxième mode de réalisation, l'élément actionneur 200 se compose principalement d'un module élémentaire d'actionnement tangentiel 202 et d'un module élémentaire d'actionnement radial 203,

Dans une variante (non représentée), on pourrait également prévoir de former un élément d'indexage dans la plaquette 21.

Le module d'actionnement tangentiel 202 comprend une structure à peignes interdigités 222 et une lame flexible 212 s'étendant dans une direction générale tangentielle par rapport à la roue 10. L'élément d'entraînement 250 est relié par la lame tangentielle 212 à la structure à peignes interdigités 222.

Lorsque le module d'actionnement tangentiel 202 est commandé par un signal d'adressage alternatif, le module d'actionnement tangentiel 202 génère un mouvement alternatif dans une direction tangentielle (flèche I).

Le module d'actionnement radial 203 comprend une électrode 223, une lame flexible 210 et des butées 243.

La lame flexible 210 présente une forme générale de L et comprend une première branche 213 et une deuxième branche 214.

La première branche 213 s'étend dans une direction tangentielle par rapport à la roue 10. La première branche 213 s'étend en porte-à-faux à partir du substrat et est flexible dans une direction radiale par rapport à la roue 10.

La deuxième branche 214 s'étend dans une direction générale radiale par rapport à la roue et relie l'extrémité libre de la première branche 213 à l'élément d'entraînement 250.

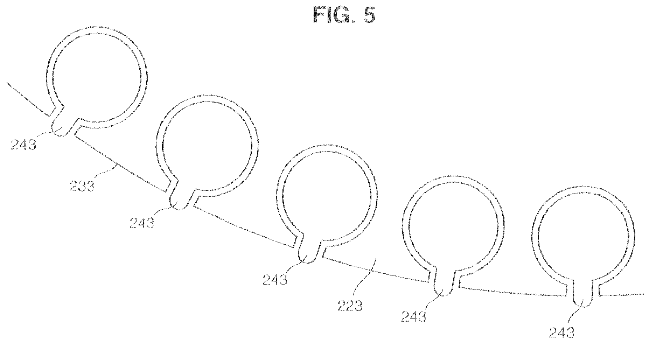

L'électrode 223 est représentée plus en détail sur la figure 5. L'électrode 223 présente une surface latérale 233 de forme générale convexe, de préférence parabolique. Les butées 243 sont disposées à intervalles réguliers le long de la surface latérale 233. Les butées 243 sont formées par des plots gravés dans la plaquette 21. Les plots sont électriquement isolés de l'électrode 223.

Lorsqu'une tension est appliquée à l'électrode 223, cette tension crée une différence de potentiels entre l'électrode 223 et la lame 210. Un champ électrique s'établit entre l'électrode 223 et la lame 210. Ce champ électrique génère une force électrostatique qui tend à rapprocher la branche 213 de la surface 233 de l'électrode 223. Cette force électrostatique entraîne la déformation de la branche 213 et par conséquent la translation de la dent d'entraînement 250 dans une direction radiale par rapport à la roue 10.

Les butées 243 permettent de limiter l'amplitude du mouvement de la lame 210 pour maintenir la lame 210 à distance de l'électrode 223 et éviter que la première branche 213 ne viennent en contact avec la surface latérale 233 de l'électrode 223. En effet, le contact de la lame 210 et de l'électrode 223 alimentés à des tensions différentes entraînerait un court-circuit susceptible de provoquer la panne du dispositif.

La forme convexe de la surface 233 de l'électrode permet de commander le mouvement de la tige 210 quelque soit la déformation initiale de la branche 213 due au positionnement de la dent d'entraînement 250 par rapport à la roue 10.

La branche 213 de la lame 210 absorbe ainsi les incertitudes de positionnement de la plaquette par rapport à la roue 10.

Lorsque le module d'actionnement tangentiel 202 est commandé par un signal d'adressage alternatif, le module d'actionnement tangentiel 202 génère un mouvement alternatif dans une direction tangentielle (flèche I) par rapport à la roue 10.

Lorsque l'électrode 223 du module d'actionnement radial 203 est commandé par un signal d'adressage alternatif, le module d'actionnement radial 203 génère un mouvement alternatif dans une direction radiale (flèche II) par rapport à la roue 10.

Le dispositif fonctionne de la manière suivante.

Le module d'actionnement tangentiel 202 et le module d'actionnement radial 203 sont commandés par des signaux d'adressage alternatifs. Les signaux d'adressage sont déphasés de sorte que l'élément d'entraînement 250 est déplacé selon un mouvement d'hystérésis. Le mouvement d'hystérésis de la dent d'entraînement 250 alterne les phases d'entraînement (flèche I) et d'actionnement (flèche II)). L'élément d'entraînement 250 engrène avec les dents successives de la roue 10 et entraîne celle-ci selon un mouvement de rotation pas à pas.

On notera que la flexibilité latérale de chacune des lames 212 et 210 permet la déformation de celle-ci sous l'action de l'autre lame. Les deux lames flexibles radiale et tangentielle 212 et 214 assurent un découplage mécanique des modules 202 et 203. En effet, la flexibilité des lames autorise un déplacement de l'élément d'entraînement 250 indépendamment suivant deux degrés de liberté élémentaires, à savoir : suivant les deux directions de translation radiale et tangentielle.

## Revendications

1. Dispositif MEMS comprenant un élément à entraîner (10), un élément d'entraînement (250) destiné à venir en prise avec l'élément à entraîner (10) et un élément actionneur (200) apte à déplacer l'élément d'entraînement (250) pour qu'il entraîne l'élément à entraîner (10) selon un mouvement pas à pas, l'élément d'entraînement (250) et l'élément actionneur (200) étant formés dans une plaquette (21) en matériau semi-conducteur, le dispositif comprenant également un support (30) sur lequel sont agencés la plaquette (21) et l'élément à entraîner (10), l'élément à entraîner (10) étant monté rotatif sur le support (30),
**caractérisé en ce que** l'élément actionneur (200) est formé par gravure dans la plaquette (21) et l'élément à entraîner (10) est réalisé par une technologie autre que la microgravure, le dispositif comprenant des moyens de précontrainte élastique (212) pour maintenir l'élément d'entraînement (250) en contact avec l'élément à entraîner (10).

2. Dispositif selon la revendication 1, dans lequel les moyens de précontrainte élastique (212) s'étendent entre l'élément actionneur (200) et l'élément d'entraînement (250).

3. Dispositif selon l'une des revendications qui précèdent, dans lequel les moyens de précontrainte élastique (212) comprennent une lame flexible (212) reliant l'élément d'entraînement (250) à l'élément actionneur (200).

4. Dispositif selon la revendication 1, comprenant des plots de positionnement (32, 33) fixés sur le support (30) permettant le positionnement de la plaquette (21) sur le support (30).

5. Dispositif selon la revendication 4, dans lequel la plaquette (21) est disposée en appui sur des plots de positionnement (32, 33).

6. Dispositif selon la revendication 5, dans lequel la plaquette (21) présente au moins une encoche (22, 23) formée sur une tranche (24) de la plaquette (21), l'encoche (22, 23) étant destinée à recevoir un plot de positionnement (32, 33) pour positionner la plaquette (21) sur le support (30).

7. Dispositif selon l'une des revendications qui précèdent, dans lequel l'élément actionneur (200) comprend un premier module d'actionnement (202) apte à déplacer l'élément d'entraînement (250) selon une première direction pour entraîner l'élément à entraîner (10) et un deuxième module d'actionnement (203) apte à déplacer l'élément d'entraînement (250) dans une deuxième direction pour éloigner l'élément d'entraînement (250) de l'élément à entraîner (10), les modules d'actionnement (202, 203) étant aptes à être commandés simultanément pour générer un mouvement combiné d'hystérésis de l'élément d'entraînement (250).

8. Dispositif selon la revendication 7, dans lequel le deuxième module d'actionnement (203) comprend une électrode (223) et une tige flexible (210), l'électrode étant apte à être commandée pour déformer la tige flexible (210) de manière à déplacer l'élément d'entraînement (250) dans une deuxième direction pour éloigner l'élément d'entraînement (250) de l'élément à entraîner (10).

9. Dispositif selon la revendication 8, dans lequel l'électrode présente une surface latérale convexe (233), de préférence parabolique, s'étendant en regard d'une portion (213) de la lame flexible (210).

10. Dispositif selon l'une des revendications 8 ou 9, dans lequel le deuxième module d'actionnement (203) comprend une série de butées (243) disposées le long d'une surface latérale (233) de l'électrode (223), les butées (243) étant aptes à éviter un contact entre la lame (210) et l'électrode (223).

11. Procédé de montage d'un dispositif selon l'une des revendications 1 à 10, comprenant les étapes de :
i) gravure dans une plaquette (21) en matériau semi-conducteur d'un élément d'entraînement (250) destiné à venir en prise avec un élément à entrainer (10), et d'un élément actionneur (200) apte à déplacer l'élément d'entraînement (250),
ii) disposition sur un même support (30) :
- de l'élément à entraîner (10) en rotation sur le support (30), l'élément à entraîner (10) étant réalisé par une technologie autre que la microgravure, et de
- de la plaquette (21), un élément actionneur (200) étant apte à déplacer l'élément d'entraînement (250) pour qu'il entraîne l'élément à entraîner (10) selon un mouvement pas à pas par rapport au support (30),
iii) mise en contact l'élément d'entraînement (250) avec l'élément à entraîner (10) par l'intermédiaire de moyens de précontrainte élastique (210, 212).

12. Procédé selon la revendication 11, dans lequel le dispositif comprenant des plots de positionnement (32, 33) fixés sur le support (30), le procédé comprend l'étape consistant à
- disposer la plaquette (21) en appui sur des plots de positionnement (32, 33).

13. Procédé selon la revendication 12, dans lequel la plaquette (21) présentant au moins une encoche (22, 23) formée sur une tranche (24) de la plaquette (21), le procédé comprend l'étape consistant à :
- disposer un plot de positionnement (32, 33) dans l'encoche (22, 23) pour positionner la plaquette (21) sur le support (30).

## Patentansprüche

1. MEMS-Vorrichtung mit einem anzutreibenden Element (10), einem Antriebselement (250), das dafür vorgesehen ist, mit dem anzutreibenden Element (10) in Eingriff zu kommen, und einem Betätigungselement (200), welches das Antriebselement (250) derart bewegen kann, dass es das anzutreibende Element (10) in einer schrittweisen Bewegung antreibt, wobei das Antriebselement (250) und das Betätigungselement (200) in einem Plättchen (21) aus Halbleitermaterial ausgebildet sind, wobei die Vorrichtung auch einen Träger (30) umfasst, auf dem das Plättchen (21) und das anzutreibende Element (10) angeordnet sind, wobei das anzutreibende Element (10) drehbar auf dem Träger (30) montiert ist,
**dadurch gekennzeichnet, dass** das Betätigungselement (200) durch Ätzen in dem Plättchen (21) gebildet wird und das anzutreibende Element (10) durch eine andere Technologie als die Mikroätzung realisiert wird, wobei die Vorrichtung Mittel zur elastischen Vorspannung (212) umfasst, um das Antriebselement (250) in Kontakt mit dem anzutreibenden Element (10) zu halten.

2. Vorrichtung nach Anspruch 1, wobei sich die Mittel zur elastischen Vorspannung (212) zwischen dem Betätigungselement (200) und dem Antriebselement (250) erstrecken.

3. Vorrichtung nach einem der vorstehenden Ansprüche, wobei die Mittel zur elastischen Vorspannung (212) eine flexible Lamelle (212) umfassen, die das Antriebselement (250) mit dem Betätigungselement (200) verbindet.

4. Vorrichtung nach Anspruch 1 umfassend Positionierungsstifte (32, 33), die auf dem Träger (30) befestigt sind, zum Positionieren des Plättchens (21) auf dem Träger (30).

5. Vorrichtung nach Anspruch 4, wobei das Plättchen (21) auf den Positionierungsstiften (32, 33) aufliegend angeordnet ist.

6. Vorrichtung nach Anspruch 5, wobei das Plättchen (21) mindestens eine Kerbe (22, 23) aufweist, die an einem Rand (24) des Plättchens (21) ausgebildet ist, wobei die Kerbe (22, 23) dafür vorgesehen ist, einen Positionierungsstift (32, 33) aufzunehmen, um das Plättchen (21) auf dem Träger (30) zu positionieren.

7. Vorrichtung nach einem der vorstehenden Ansprüche, wobei das Betätigungselement (200) ein erstes Betätigungsmodul (202) umfasst, welches das Antriebselement (250) in einer ersten Richtung bewegen kann, um das anzutreibende Element (10) anzutreiben, und ein zweites Betätigungsmodul (203) umfasst, welches das Antriebselement (250) in einer zweiten Richtung bewegen kann, um das Antriebselement (250) von dem anzutreibenden Element (10) weg zu bewegen, wobei die Betätigungsmodule (202, 203) gleichzeitig gesteuert werden können, um eine kombinierte Hysteresebewegung des Antriebselements (250) zu erzeugen.

8. Vorrichtung nach Anspruch 7, wobei das zweite Betätigungsmodul (203) eine Elektrode (223) und eine flexible Stange (210) umfasst, wobei die Elektrode dahingehend gesteuert werden kann, die flexible Stange (210) derart zu verformen, dass das Antriebselement (250) in einer zweiten Richtung bewegt wird, um das Antriebselement (250) von dem anzutreibenden Element (10) weg zu bewegen.

9. Vorrichtung nach Anspruch 8, wobei die Elektrode eine konvexe, vorzugsweise parabolische Seitenfläche (233) aufweist, die sich gegenüber einem Abschnitt (213) der flexiblen Lamelle (210) erstreckt.

10. Vorrichtung nach einem der Ansprüche 8 oder 9, wobei das zweite Betätigungsmodul (203) eine Reihe von Anschlägen (243) umfasst, die entlang einer Seitenfläche (233) der Elektrode (223) angeordnet sind, wobei die Anschläge (243) den Kontakt zwischen der Lamelle (210) und der Elektrode (223) verhindern können.

11. Montageverfahren für eine Vorrichtung nach einem der Ansprüche 1 bis 10, wobei das Verfahren die Schritte umfasst:
i) Ätzen in ein Plättchen (21) aus Halbleitermaterial eines Antriebselements (250), das dafür vorgesehen ist, mit einem anzutreibenden Element (10) in Eingriff zu kommen, und eines Betätigungselements (200), welches das Antriebselement (250) bewegen kann,
ii) Anordnen auf demselben Träger (30):
- des drehend anzutreibenden Elements (10) auf dem Träger (30), wobei das anzutreibende Element (10) durch eine andere Technologie als Mikroätzen realisiert wird, und
- des Plättchens (21), eines Betätigungselements (200), welches das Antriebselement (250) derart bewegen kann, dass es das anzutreibende Element (10) in einer schrittweisen Bewegung in Bezug auf den Träger (30) antreibt,
iii) Herstellen des Kontakts zwischen dem Antriebselement (250) und dem anzutreibenden Element (10) mittels der Mittel zur elastischen Vorspannung (210, 212).

12. Verfahren nach Anspruch 11, wobei die Vorrichtung Positionierungsstifte (32, 33) umfasst, die auf dem Träger (30) befestigt sind, wobei das Verfahren den Schritt umfasst:
- Anordnen des Plättchens (21) aufliegend auf den Positionierungsstiften (32, 33).

13. Verfahren nach Anspruch 12, wobei das Plättchen (21) mindestens eine Kerbe (22, 23) aufweist, die an einem Rand (24) des Plättchens (21) ausgebildet ist, wobei das Verfahren den Schritt umfasst:
- Anordnen eines Positionierungsstiftes (32, 33) in der Kerbe (22, 23) zum Positionieren des Plättchens (21) auf dem Träger (30).

## Claims

1. A MEMS device comprising an element to be driven (10), a driving element (250) intended to be engaged with the element to be driven (10) and an actuator element (200) able to move the driving element (250) so that it drives the element to be driven (10) according to a stepwise movement, the driving element (250) and the actuator element (200) being formed in a plate (21) made of semiconductor material, the device also comprising a support (30) on which the plate (21) and the element to be driven (10) are arranged, the element to be driven (10) being rotatably mounted on the support (30),
**characterized in that** the actuator element (200) is formed by etching in the plate (21) and the element to be driven (10) is produced by a technology other than the micro-etching, the device comprising elastic prestressing means (212) for holding the driving element (250) in contact with the element to be driven (10).

2. The device according to claim 1, wherein the elastic prestressing means (212) extend between the actuator element (200) and the driving element (250).

3. The device according to any of the preceding claims, wherein the elastic prestressing means (212) comprise a flexible blade (212) connecting the driving element (250) to the actuator element (200).

4. The device according to claim 1, comprising positioning studs (32, 33) fixed on the support (30) allowing the positioning of the plate (21) on the support (30) .

5. The device according to claim 4, wherein the plate (21) is disposed in abutment on positioning studs (32, 33).

6. The device according to claim 5, wherein the plate (21) has at least one notch (22, 23) formed on an edge (24) of the plate (21), the notch (22, 23) being intended to receive a positioning stud (32, 33) in order to position the plate (21) on the support (30).

7. The device according to any of the preceding claims, wherein the actuator element (200) comprises a first actuation module (202) able to move the driving element (250) in a first direction to drive the element to be driven (10) and a second actuation module (203) able to move the driving element (250) in a second direction to move the driving element (250) away from the element to be driven (10), the actuation modules (202, 203) being able to be controlled simultaneously to generate a combined movement of hysteresis of the driving element (250).

8. The device according to claim 7, wherein the second actuation module (203) comprises an electrode (223) and a flexible rod (210), the electrode being able to be controlled to deform the flexible rod (210) so as to move the driving element (250) in a second direction to move the driving element (250) away from the element to be driven (10).

9. The device according to claim 8, wherein the electrode has a convex, preferably parabolic, lateral surface (233) extending facing a portion (213) of the flexible blade (210).

10. The device according to any of claims 8 or 9, wherein the second actuation module (203) comprises a series of abutments (243) disposed along a lateral surface (233) of the electrode (223), the abutments (243) being able to avoid contact between the blade (210) and the electrode (223).

11. A method for mounting a device according to any of claims 1 to 10, comprising the steps of:
i) etching in a plate (21) made of semiconductor material a driving element (250) intended to be engaged with an element to be driven (10), and an actuator element (200) able to move the driving element (250),
ii) disposing on the same support (30):
- the element to be driven (10) in rotation on the support (30), the element to be driven (10) being produced by a technology other than the micro-etching, and
- the plate (21), an actuator element (200) being able to move the driving element (250) so that it drives the element to be driven (10) according to a stepwise movement relative to the support (30),
iii) putting the driving element (250) into contact with the element to be driven (10) by means of elastic prestressing means (210, 212).

12. The method according to claim 11, wherein the device comprises positioning studs (32, 33) fixed on the support (30), the method comprises the step consisting of:
- disposing the plate (21) in abutment on positioning studs (32, 33).

13. The method according to claim 12, wherein the plate (21) has at least one notch (22, 23) formed on an edge (24) of the plate (21), the method comprises the step consisting of:
- disposing a positioning stud (32, 33) in the notch (22, 23) to position the plate (21) on the support (30).
